# EUROPEAN PATENT APPLICATION

(11) **EP 4 462 835 A1**
(43) Date of publication of application: **13.11.2024**
(21) Application number: 24171015.1
(22) Date of filing: 18.04.2024
(51) Int. Cl.: H04W 8/22, H04W 88/06, H04W 24/00

(54) **USER EQUIPMENT ARCHITECTURE ADAPTATION FOR INTRA-BAND SCENARIOS**

(30) Priority: 12.05.2023 WO PCT/CN2023/094061
(71) Applicant: Nokia Technologies Oy, 02610 Espoo (FI)
(72) Inventor: DU, Lei, Beijing (CN); DALSGAARD, Lars, Oulu (FI); VASENKARI, Petri Juhani, Turku (FI); CHEN, Yue Ji, Hangzhou (CN)
(74) Representative: EIP

(57) **Abstract**

Embodiments of the present disclosure relate to devices, methods, apparatuses and computer readable storage media of user equipment (UE) architecture adaptation for intra-band scenarios. The method comprises determining, at a terminal device, an operating architecture type of the terminal device, wherein the terminal device is served by a first cell and at least one second cell in an intra-band operation; and applying at least one Radio Resource Management (RRM) requirement based on the determined operating architecture type of the terminal device.

## Description

### FIELD

Embodiments of the present disclosure generally relate to the field of telecommunication and in particular to devices, methods, apparatuses and computer readable storage media of user equipment (UE) architecture adaptation for intra-band scenarios.

### BACKGROUND

The collocated scenario has been assumed when defining the radio resource management (RRM) requirements for Frequency range 1 (FR1) intra-band New Radio Carrier Aggregation (NR-CA) or EUTRA-NR dual connectivity (EN-DC). It is to be expected that the EN-DC/NR-CA available areas could be enhanced by means of a non-collocated deployment.

### SUMMARY

In a first aspect, there is provided an apparatus. The apparatus comprises at least one processor; and at least one memory storing instructions that, when executed by the at least one processor, cause the apparatus at least to: determine an operating architecture type of the apparatus, wherein the apparatus is served by a first cell and at least one second cell in an intra-band operation; and apply at least one RRM requirement based on the determined operating architecture type of the apparatus.

In a second aspect, there is provided an apparatus. The apparatus comprises at least one processor; and at least one memory storing instructions that, when executed by the at least one processor, cause the apparatus at least to: transmit, to a terminal device, information associated with an operating architecture type of the terminal device, wherein the terminal device is served by a first cell and at least one second cell in an intra-band operation.

In a third aspect, there is provided a method. The method comprises determining, at a terminal device, an operating architecture type of the terminal device, wherein the terminal device is served by a first cell and at least one second cell in an intra-band operation; and apply at least one RRM requirement based on the determined operating architecture type of the terminal device.

In a fourth aspect, there is provided a method. The method comprises transmitting, from a network device and to a terminal device, information associated with an operating architecture type of the terminal device, wherein the terminal device is served by a first cell and at least one second cell in an intra-band operation.

In a fifth aspect, there is provided an apparatus comprising means for determining an operating architecture type of the apparatus, wherein the apparatus is served by a first cell and at least one second cell in an intra-band operation; and means for applying at least one RRM requirement based on the determined operating architecture type of the apparatus.

In a sixth aspect, there is provided an apparatus comprising means for transmitting, to a terminal device, information associated with an operating architecture type of the terminal device, wherein the terminal device is served by a first cell and at least one second cell in an intra-band operation.

In a seventh aspect, there is provided a computer readable medium having a computer program stored thereon which, when executed by at least one processor of an apparatus, causes the apparatus to carry out the method according to the third aspect or the fourth aspect.

Other features and advantages of the embodiments of the present disclosure will also be apparent from the following description of specific embodiments when read in conjunction with the accompanying drawings, which illustrate, by way of example, the principles of embodiments of the disclosure.

### BRIEF DESCRIPTION OF THE DRAWINGS

Embodiments of the disclosure are presented in the sense of examples and their advantages are explained in greater detail below, with reference to the accompanying drawings.
FIG. 1 illustrates an example environment in which example embodiments of the present disclosure may be implemented;
FIG. 2 shows a signaling chart illustrating an example of process according to some example embodiments of the present disclosure;
FIG. 3 shows a flowchart of an example method of UE architecture adaptation for intra-band scenarios according to some example embodiments of the present disclosure;
FIG. 4 shows a flowchart of an example method of UE architecture adaptation for intra-band scenarios according to some example embodiments of the present disclosure;
FIG. 5 shows a simplified block diagram of a device that is suitable for implementing example embodiments of the present disclosure; and
FIG. 6 shows a block diagram of an example computer readable medium in accordance with some embodiments of the present disclosure.

Throughout the drawings, the same or similar reference numerals may represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein may be implemented in various manners other than the ones described below.

In the following description and claims, unless defined otherwise, all technical and scientific terms used herein may have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second" and the like may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT), an Enhanced Machine type communication (eMTC) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the terms "network device", "radio network device" and/or "radio access network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, low earth orbit (RAN) split architecture includes a Centralized Unit (CU) and a Distributed Unit (DU). In some other example embodiments, part of the radio access network device or full of the radio access network device may embarked on an airborne or space-borne NTN vehicle.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

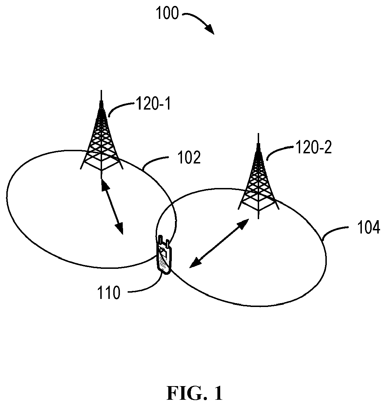

FIG. 1 shows an example communication network 100 in which embodiments of the present disclosure may be implemented. As shown in FIG. 1, the communication network 100 may include a terminal device 110, which may also be referred to as a UE.

The communication network 100 may further include a network device 120-1 providing a cell 102 and a network device 120-2 providing a cell 104. Hereinafter the network device 120 may also be referred to as a gNB respectively.

In some example scenarios, the terminal device 110 may be served by a first cell (for example, the cell 102), and at least one second cell (for example, the cell 104) . For example, the first cell may act as a primary cell (PCell) of the terminal device. The second cell may act as a secondary cell (SCell) of the terminal device 110 or a primary secondary cell (PSCell) of the terminal device 110. The cell 102 and cell 104 may be collocated or non-collocated. If the cell 102 and cell 104 are collocated, they may be understood as being deployed or located at a same place or at least some of the TRPs of the cell 102 and cell 104 are deployed at a same location. By contrast, if the cell 102 and cell 104 are the non-collocated, they may be understood as being deployed or located at different places or at least some of the TRPs of the cell 102 and cell 104 are deployed at different locations.

The communication network 100 shown in the FIG.1 may refer to both EUTRA-NR dual connectivity (EN-DC) and NR carrier aggregation (NR-CA) scenarios.

It is to be understood that the first and the second cells of the terminal device 110 may also be provided by a same network device.

It is to be understood that the number of network devices and terminal devices shown in FIG. 1 is given for the purpose of illustration without suggesting any limitations. The communication network 100 may include any suitable number of network devices and terminal devices.

In some example embodiments, links from the network device 120-1 or 120-2 to the terminal device 110 may be referred to as a downlink (DL), while links from the terminal device 110 to the network device 120-1 or 120-2 may be referred to as an uplink (UL). In DL, the network device 120-1 or 120-2 is a transmitting (TX) device (or a transmitter) and the terminal device 110 is a receiving (RX) device (or receiver). In UL, the terminal device 110 is a TX device (or transmitter) and the network device 120 is a RX device (or a receiver).

Communications in the communication network 100 may be implemented according to any proper communication protocol(s), includes, but not limited to, cellular communication protocols of the first generation (1G), the second generation (2G), the third generation (3G), the fourth generation (4G), 5G, the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, includes but not limited to: Code Division Multiple Access (CDMA), Frequency Division Multiple Access (FDMA), Time Division Multiple Access (TDMA), FDD, TDD, Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

In release 18, UE requirements supporting intra-band non-collocated EUTRA-NR dual connectivity/ NR carrier aggregation (EN-DC/NR-CA) deployment has been studied. In this situation, RRM requirements need to be defined to support FR1 intra-band non-collocated scenarios.

Different UE architectures are being discussed. For example, UE architecture type 1 (hereinafter may also be referred to as UE type 1) is a baseline architecture which has been used for intra-band NR-CA/EN-DC (where collocation deployment is always assumed). The UE receives from intra-band carriers via single receive chain. UE architecture type 2 (hereinafter may also be referred to as UE type 2) has been agreed to support the FR1 intra-band non-collocated scenarios. The UE receives via separate receive chains from different carriers on the same band or overlapping bands. This is the same as UE behavior when operating inter-band CA.

Furthermore, other UE architecture type(s) are still being discussed. The details of example UE architecture types are listed as below.

**Table 1: UE architectures**

| **UE type** | **CC#** | **antenna / LNA** | | **Mixer** | **Analog BB** | **#Rx** | **Frequency Separation between 2cc** | **NRCA/ENDC** | **power imbalance** | **comment** |
|---|---|---|---|---|---|---|---|---|---|---|
| **1** | 1 | 4 shared | | 4 shared | 4 shared | 4Rx | ≤ X MHz | NRCA, ENDC | 6dB full range | Baseline architecture (i.e. legacy architecture) |
| | 2 | | | | | 4Rx | | | | |
| **2** | 1 | 2 | 4 total | 2 | 2 | 2Rx | No limitation | NRCA, ENDC | 25dB full range | Reuse of baseline architecture restricted to |
| | 2 | 2 | | 2 | 2 | 2Rx | or ≤ X MHz | | | 2Rx/band but need 2LO frequencies |
| **3a** | 1 | 4 shared | | 4 | 4 | 4Rx | No limitation or ≤ X MHz | ENDC | 6<P≤25dB partial range | Reuse of baseline RFFE architecture adding RF split after 2 LNAs +IBB/Rx |
| | 2 | | | 2 | 2 | 2Rx | | | | => common AGC on LNA => 25dB only for some range |
| **3b** | 1 | 4 shared | | 4 | 4 | 4Rx | No limitation or ≤ X MHz | NRCA, ENDC | 6<P≤25dB partial range | Reuse of baseline RFFE architecture adding RF split after 2 LNAs + IBB/Rx |
| | 2 | | | 4 | 4 | 4Rx | | | | |
| | | | | | | | | | | => common AGC on LNA => 25dB only for some range |
| **4a** | 1 | 4 | 6 total | 4 | 4 | 4Rx | No limitation or ≤ X MHz | ENDC | 25dB full range | Requires 6 antennas and LNA => is it compatible with smartphone? (for which frequency range), FWA only |
| | 2 | 2 | | 2 | 2 | 2Rx | | | | |
| **4b** | 1 | 4 | 8 total | 4 | 4 | 4Rx | No limitation or ≤ X MHz | NRCA, ENDC | 25dB full range | Requires 8 antennas and LNA => is it compatible with smartphone? (for which frequency range), FWA only |

The support of such intra-band non-collocated EN-DC is indicated by an example UE capability as below. The intra-band non-collocated EN-DC is also named as inter-band EN-DC with overlapping DL bands. The UE indicating this capability may be considered as type 2 UE. As an example, if a UE indicates the capability below, it means it is a type 2 UE supporting intra-band non-collocated scenario hence network is able to configure the band combination with potential non-collocated deployment for FR1 intra-band EN-DC e.g., n42+n77/78. Otherwise, network shall not configure such band combination.

**Table 2: UE capability**

| | | | | |
|---|---|---|---|---|
| ***interBandMRDC-WithOverlapDL-Bands-r16*** | BC | No | N/A | FR1 only |
| Indicates the UE supports FDD-FDD or TDD-TDD inter-band (NG)EN-DC/NE-DC operation with overlapping or partially overlapping DL bands with an (NG)EN-DC/NE-DC MRTD according to clause 7.6.2/7.6.5 in 38.133 [5] and inter-band RF requirements (i.e., type 2 UE). If the capability is not reported, the UE supports FDD-FDD or TDD-TDD inter-band operation with overlapping or partially DL bands with (NG)EN-DC/NE-DC MRTD<3us according to clause 7.6.3 in 38.133 [5] and intra-band RF requirements (i.e., type 1 UE). | | | | |

From RRM side, some of the RRM requirements are defined considering different scenarios. For instance, the scheduling restriction is different between intra-band and inter-band scenarios. For example, when intra-band carrier aggregation in FR1 is performed, the scheduling restrictions on FR1 serving PCell or primary secondary cell (PSCell) applies to all serving cells in the same band on the symbols that fully or partially overlap with the restricted symbols. When inter-band carrier aggregation within FR1 is performed, there are no scheduling restrictions on FR1 serving cell(s) in the bands due to radio link monitoring performed on FR1 serving PCell or PSCell in different bands. As another example, when intra-band carrier aggregation in FR1 is performed, the UE is capable of handling at least a relative or a maximum receive timing difference (MRTD) of 3us between slot timing of different carriers to be aggregated at the UE receiver. When inter-band carrier aggregation within FR1 is performed, the UE is capable of handling at least a relative or a maximum transmission timing difference (MTTD) of 34.6us between slot timing of all pairs of TAGs in FR1 and a MRTD of 33us between slot timing of different carriers.

Similarly, the interruption is expected differently on intra-band cells and inter-band cells. For the SCell in another band, i.e., SCell addition, SCell activation etc. being performed in another band, there may be a shorter interruption on PCell compared with intra-band scenario.

In addition, the SCell activation delay may be reduced when activating an intra-band contiguous SCell. The SCell activation delay for intra-band contiguous SCell is saved by 1 Tᵣₛ by reusing the PCell timing information. And for SSB-less operation, the UE may take SCell as activated by completely reusing PCell information. There are no dedicated activation steps on SCell so only 3ms is needed to process the SCell activation command. However, a longer SCell activation delay is expected for activating an inter-band SCell where the UE must perform Automatic Gain Control (AGC), cell detection and L1-RSRP measurement in order to activate the SCell.

Such difference on RRM requirements arises because of the different UE architectures i.e., type 1 is assumed for intra-band and type 2 is assumed for inter-band scenarios. When type 2 is agreed to support intra-band non-collocated scenario, it was agreed that the RRM requirements for inter-band operation can be reused for the type 2 UE.

For example, a type 1 UE may be supposed to apply 1) scheduling restriction to all the carriers on the same band; 2) intra-band interruption on the carriers on the same band; 3) potential faster SCell activation; 4) intra-band MTTD/MRTD requirement, etc. A type 2 UE may be supposed to apply 1) no scheduling restriction on the carriers on same band; 2) inter-band interruption on the carriers on the same band; 3) longer SCell activation delay; 4) inter-band MTTD/MRTD requirement, etc.

Hence if a UE indicates the capability of supporting intra-band NR-CA/EN-DC, it means it is type 2 supporting intra-band non-collocated scenario, and the MRTD and RRM requirements for inter-band operation can be reused for the type 2 UE.

It has been discussed that a UE supporting type-2 shall support a function to switch between type-1 and type-2 based on a request from a BS. In other words, type-1 and type-2 are UE capability, and type-1 is mandatory, and type-2 is optional. This implies a UE indicating the capability of type-2 also support type-1 operation and may work using either type-1 or type-2 mode.

Furthermore, the SCell may be collocated or non-collocated deployed in practical deployment for a particular band combination. For instance, some n77 SCells are collocated with n42 PCell and some n77 SCell are non-collocated. Meanwhile, it is unknown to the UE whether an intra-band SCell is collocated or non-collocated with PCell or another serving cell. For certain UE type, it will blindly treat the intra-band SCells in the same way, irrespective of collocated or non-collocated in practice.

For UE type 2, while it can benefit from no scheduling restriction and smaller inter-band interruption, it suffers from longer activation delay as the inter-band SCell activation delay applies. This may degrade the performance e.g., extending the SCell activation delay when the SCells being activated are still collocated deployed.

Therefore, in a case where the intra-band scenario is extended to consider more practical non-collocated deployment, how to avoid the performance degradation on existing co-located deployment scenario may need to be further discussed. It is noted that in the present disclosure, SCell is used just as a non-limiting example, and it may also be applicable to other type of secondary cell such as for example PSCell.

The present disclosure proposes a solution of UE architecture adaptation for intra-band scenarios including NR-CA and EN-DC. In this solution, the terminal device 110 may determine an operating architecture type of the terminal device, wherein the terminal device is served by a primary cell and at least one secondary cell in an intra-band operation and apply at least one RRM requirement based on the determined operating architecture type of the terminal device.

Example embodiments of the present disclosure will be described in detail below with reference to the accompanying drawings.

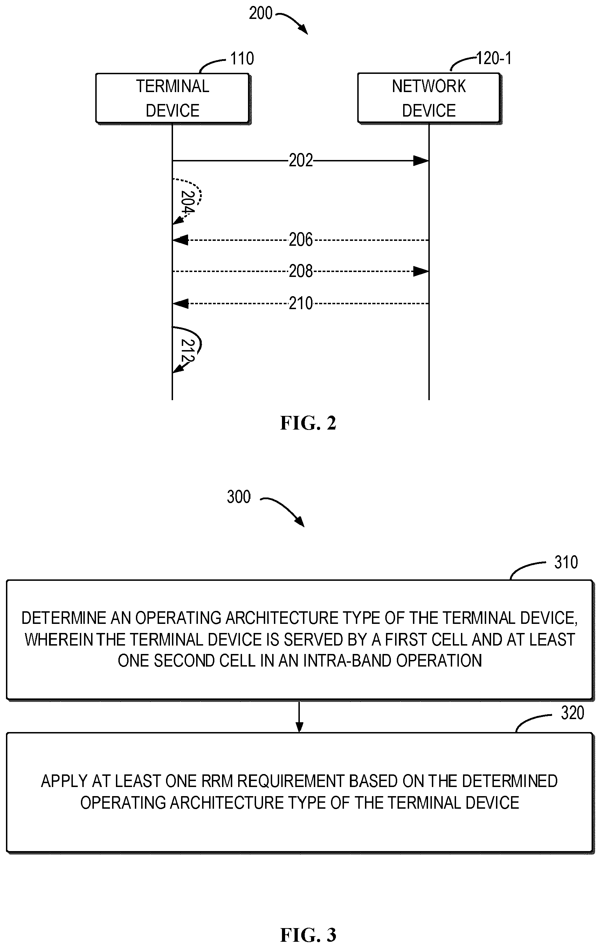

Reference is now made to FIG. 2, which shows a signaling chart 200 for communication according to some example embodiments of the present disclosure. As shown in FIG. 2, the signaling chart 200 involves the terminal device 110 and a network device 120-1, which may manage a first cell such as for example the cell 102 of the terminal device 110 as exampled in Fig.2.

For the purpose of discussion, reference is made to FIG. 1 to describe the signaling chart 200. It is to be understood that the process shown in FIG. 2 may also be adopted by other terminal devices and network devices shown in FIG. 1.

As shown in FIG. 2, the terminal device 110 may transmit (202), to the network device 120-1, an indication of a capability of supporting a first cell and the at least one second cell in a non-collocated intra-band operation. As described above, the first cell may act as a PCell of the terminal device. The second cell may act as a SCell of the terminal device 110 or a PSCell of the terminal device 110.

Upon the terminal device 110 indicating a capability of supporting the PCell and the at least one SCell in a non-collocated intra-band operation, the terminal device 110 may determine (204) an operating architecture type of the terminal device 110.

As an option, the terminal device 110 may determine a default operating architecture type. For instance, if the terminal device 110 indicates the capability, the default operating architecture type is a second operating architecture type (i.e., UE type 2). Otherwise, the default operating architecture type is a first operating architecture type (i.e., UE type 1).

Alternatively, the default operating architecture type is always type 1 irrespective if the terminal device 110 indicates the capability.

As another option, the network device 120-1 may transmit (206) an indication to the terminal device 110. For example, the network device 120-1 may transmit an indication of a specific operating architecture type to the terminal device 110. It is also possible that the network device 120-1 may transmit an indication whether the primary cell and the at least one secondary cell are collocated or non-collocated. Based on this indication, the terminal device 110 may determine the operating architecture type accordingly. For example, if the network indicates collocated deployment, the UE may determine the Type 1 as the operating architecture type. Otherwise if the network does not indicate collocated deployment or indicates non-collocated deployment, the UE may determine the Type 2 as the operating architecture type.

Alternatively, the terminal device 110 may determine an expected operating architecture type of the terminal device 110 (e.g., its preference for a UE type). The terminal device 110 may transmit (208) the expected operating architecture type of the terminal device 110 to the network device 120-1, for example, along with an indication of the capability of supporting the PCell and the at least one SCell in a non-collocated intra-band operation.

If the terminal device 110 receives (210), from the network device 120-1, an acknowledgement for the expected operating architecture type of the terminal device 110, the terminal device 110 may determine the expected operating architecture type as the operating architecture type. The acknowledgement may be indicated to the terminal device 110 explicitly or implicitly.

It is also possible that the operating architecture type of the terminal device 110 may be determined based on an evaluation of the assistance conditions e.g., receive time difference (e.g., associated with the PCell and SCell), receive power difference (e.g., associated with the PCell and SCell), Quasi Co-Located (QCL) information etc. If at least one assistance condition is fulfilled, the terminal device 110 may determine the operating architecture type of the terminal device 110 as a UE type1, otherwise a UE type 2.

After determining the operating architecture type of the terminal device 110, the terminal device 110 applies (212) at least one RRM requirement based on the determined operating architecture type.

Based on the determination of the operating architecture type of the terminal device 110, the terminal device 110 applies at least one RRM requirement based on a UE type 1, a UE type 2 or a UE type 3, e.g., an optimized/mixed type 2).

For example, the terminal device 110 may operate an optimized (or mixed) UE type 2 based on existing type 2 architecture. The support of this mixed UE type 2 or type 3 can be indicated in the capability of the terminal device 110, or configured by network, or pre-defined as a dedicated UE type.

If the UE type 1 is determined as the operating architecture type of the terminal device 110, the terminal device 110 may apply the at least one RRM requirement by applying, for example, 1) a scheduling restriction to all the carriers on the same band; 2) an intra-band interruption on the carriers on the same band; 3) an intra-band SCell activation; 4) intra-band MTTD/MRTD requirement, etc.

If the UE type 2 is determined as the operating architecture type of the terminal device 110, the terminal device 110 may apply the at least one RRM requirement by applying, for example, 1) no scheduling restriction on the carriers on same band; 2) an inter-band interruption on the carriers on same band; 3) an inter-band SCell activation delay; 4) inter-band MTTD/MRTD requirement, etc.

If the optimized type 2 (i.e., the mixed UE type 2 or UE type 3) is determined as the operating architecture type of the terminal device 110, the terminal device 110 may apply the at least one RRM requirement by applying, for example, 1) no scheduling restriction on the carriers on same band; 2) an inter-band interruption on the carriers on same band; 3) an intra-band SCell activation delay.4) inter-band MTTD/MRTD requirement, etc

For the optimized type 2 (i.e., the mixed UE type 2), how to apply the UE type for each RRM requirement may be indicated by the terminal device or the network device.

In some embodiments, the terminal device 110 may further indicate the details of the mixed type, i.e., the operating architecture type for each of the RRM requirements respectively. For instance, the terminal device 110 may indicate the support of type 2 based scheduling restriction, MTTD/MRTD requirement and type 1 based interruption and SCell activation, or the support of type-2 based scheduling restriction, MTTD/MRTD requirement and interruption and type1 based SCell activation.

As another option, the network device 120-1 may indicate which type the UE is expected to apply for each of the RRM requirements. For instance, the network device 120-1 may indicate the UE to apply type 1 based SCell activation and type 2 based scheduling restriction, MTTD/MRTD requirement and interruption.

It is also possible that the optimized type 2 can be pre-defined as e.g., the type-1 based SCell activation and the type 2 based scheduling restriction, MTTD/MRTD requirement and interruption.

Furthermore, in some embodiments, the terminal device 110 may indicate the operating architecture type to network device 120-1 to align which RRM requirement may apply.

As described above, embodiments of the present disclosure propose a mechanism for the UE architecture adaptation.

In some embodiments, the terminal device 110 may indicate it is capable of intra-band non-collocated scenarios in capability message. The network device 120-1 knows the terminal device 110 supports such scenario thus configures SCell for CA operation, where the SCell may be collocated or non-collocated based on network deployment.

When the UE receives the configuration, it determines the default UE type based on pre-defined rule. Then the RRM requirement may apply based on the default UE type. For instance, if the default UE type is type2, the UE may operate under type 2 for receiving the intra-band carriers, hence there is no scheduling restriction, and the inter-band interruption, MTTD/MRTD requirement and SCell activation delay may apply. Since the default setting is also known to the network device 120-1, the network device 120-1 has aligned understanding on the operating UE type and may determine network's behaviour considering corresponding RRM requirements.

In some other embodiments, the network device 120-1 may indicate the deployment status e.g., collocation or non-collocation. If the terminal device 110 receives "collocation", it may operate under type 1. Otherwise, it may operate under type 2. Alternatively, the network device 120-1 may request the UE to operate under certain UE type. The terminal device 110 may follow instruction of the network device 120-1 accordingly. The network indication may be included in RRC configuration message adding the SCell, or some other messages. In addition, to align the understanding on practical operating UE type, the terminal device 110 may also explicitly indicate the operating UE type to network or an acknowledgement in response to the network indication.

In some other embodiments, the terminal device 110 may indicate its preference of UE type e.g., in capability message. When the network device 120-1 configures SCell for CA operation, it may indicate ACK that the terminal device 110 is expected to operate under the preferred type or indicate a UE type if the preferred UE type is not acceptable. The terminal device 110 may follow network decision.

It is also possible that the terminal device 110 may evaluate the receive time difference, receive power difference etc. at the terminal device side. If some conditions are fulfilled, e.g., RTD is within a threshold e.g., 260ns and the receive power difference is within a threshold e.g., 6dB, the terminal device 110 may assume it is collocated scenario and indicates to the network device 120-1 the preferred UE type based on the evaluation of conditions.

Furthermore, the terminal device 110 and/or the network device 120-1 may further indicate mixed UE type, e.g., which architecture type is used for scheduling restriction, MTTD/MRTD requirementinterruption and SCell activation delay respectively.

Based on the proposed solution, an example of impact on the standard specification may be that the UE may indicate that it is capable of supporting NR-CA and/or EN-DC non-collocated intra-band operation and the network may indicate the UE to operate Type 2 mode.

As another example, for intra-band non-contiguous NR CA, the UE shall be capable of handling at least a relative receive timing difference of 3us between timing of different carriers to be aggregated at the UE receiver provided that UE indicates that it is capable of of supporting NR-CA non-collocated intra-band operation and network indicates the UE to operate Type 1 mode.

FIG. 3 shows a flowchart of an example method 300 of UE architecture adaptation for intra-band scenarios according to some example embodiments of the present disclosure. The method 300 may be implemented at the apparatus (terminal device 110) as shown in FIG. 1. For the purpose of discussion, the method 300 will be described with reference to FIG.1.

At 310, the terminal device 110 determines an operating architecture type of the terminal device, wherein the terminal device is served by a first cell and at least one second cell in an intra-band operation.

At 320, the terminal device 110 applies at least one RRM requirement based on the determined operating architecture type of the terminal device.

In some example embodiments, the operating architecture type is determined in accordance with a determination that the terminal device 110 indicates a capability of supporting the first cell and the at least one second cell in a non-collocated intra-band operation.

In some example embodiments, the determined operating architecture type is a default operating architecture type.

In some example embodiments, the operating architecture type is determined based on an indication received from a network device.

In some example embodiments, the indication indicates at least one of: a specific operating architecture type of the terminal device 110, or whether the first cell and the at least one second cell are collocated or non-collocated.

In some example embodiments, the terminal device may transmit, to a network device, an indication of an expected operating architecture type. If the terminal device determines that an acknowledgement for the expected operating architecture type is received from the network device, the operating architecture type is determined as the expected operating architecture type.

In some example embodiments, the operating architecture type is determined based on at least one assistance condition, the at least one assistance condition comprises at least one of the following: receive time difference associated with the first cell and the at least one second cell, power difference associated with the first cell and the at least one second cell, or quasi co-located information associated with the first cell and the at least one second cell.

In some example embodiments, the at least one RRM requirement is applied corresponding to the determined operating architecture type for at least one of the following: a scheduling restriction; an interruption operation, an activation delay of the at least one second cell, or an MTTD/MRTD requirement.

In some example embodiments, if the terminal device determines that a first operating architecture type is determined as the operating architecture type of the terminal device 110, the at least one RRM requirement is applied by at least one of the following: applying a scheduling restriction to all carriers on a same band; applying an intra-band interruption on all carriers on the same band; applying an intra-band cell activation delay of the at least one second cell; or applying an intra-band MTTD/MRTD requirement.

In some example embodiments, if the terminal device determines that a second operating architecture type is determined as the operating architecture type of the terminal device 110, the at least one RRM requirement is applied by at least one of the following: applying no scheduling restriction on the carriers on a same band; applying an inter-band interruption on the carriers on the same band; applying an inter-band cell activation delay of the at least one second cell; or applying an inter-band MTTD/MRTD requirement.

In some example embodiments, if the terminal device determines that a third operating architecture type is determined as the operating architecture type of the terminal device 110, the at least one RRM requirement is applied based on whether the apparatus applies the at least one RRM requirement according to an intra-band or an inter-band operation.

In some example embodiments, the at least one RRM requirement is applied by at least one of the following: applying a scheduling restriction or no scheduling restriction on the carriers on a same band; applying at least one of an inter-band interruption or an intra-band interruption on the carriers on the same band; applying at least one of an intra-band cell activation delay or an inter-band cell activation delay of the at least one second cell; or applying at least one of an intra-band MTTD/MRTD requirement or an inter-band MTTD/MRTD requirement.

In some example embodiments, the terminal device may transmit, to a network device, information related to the third architecture type if the terminal device 110 supports the third architecture type.

In some example embodiments, the terminal device may receive, from a network device, information related to the third architecture type if the terminal device 110 supports the third architecture type.

In some example embodiments, the terminal device may transmit an indication of the determined operating architecture type to a network device.

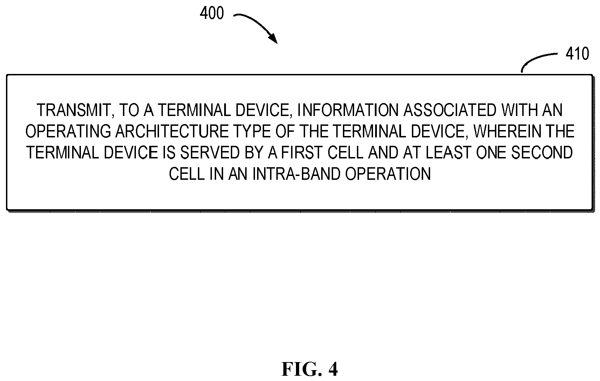

FIG. 4 shows a flowchart of an example method 400 of UE architecture adaptation for intra-band scenarios according to some example embodiments of the present disclosure. The method 400 may be implemented at the apparatus (the network device 120-1) as shown in FIG. 1. For the purpose of discussion, the method 400 with be described with reference to FIG. 1.

At 410, the network device 120-1 transmits, to a terminal device, information associated with an operating architecture type of the terminal device, wherein the terminal device is served by a first cell and at least one second cell in an intra-band operation.

In some example embodiments, the network device 120-1 may receive, from the terminal device, an indication of a capability of supporting the first cell and the at least one second cell in a non-collocated intra-band operation.

In some example embodiments, the information comprises one of: a specific operating architecture type of the terminal device or whether the first cell and the at least one second cell are collocated or non-collocated.; or an acknowledgement for an expected operating architecture type selected by the terminal device from a first operating architecture type and a second operating architecture type.

In some example embodiments, the network device 120-1 may perform at least one of: receiving, from the terminal device, information related to a third architecture type if the terminal device supports the third architecture type; or transmitting, to the terminal device, information related to the third architecture type if the terminal device supports the third architecture type, and wherein the third architecture type is associated with whether the terminal device applies the at least one RRM requirement according to an intra-band or an inter-band operation.

In some example embodiments, the network device 120-1 may receive, from the terminal device, an indication of the operating architecture type determined by the terminal device.

In some example embodiments, an apparatus capable of performing the method 300 (for example, implemented at the terminal device 110) may include means for performing the respective steps of the method 300. The means may be implemented in any suitable form. For example, the means may be implemented in a circuitry or software module.

In some example embodiments, the apparatus comprises means for determining an operating architecture type of the apparatus, wherein the apparatus is served by a first cell and at least one second cell in an intra-band operation; and means for applying at least one RRM requirement based on the determined operating architecture type of the apparatus.

In some example embodiments, the operating architecture type is determined in accordance with a determination that the apparatus indicates a capability of supporting the first cell and the at least one second cell in a non-collocated intra-band operation.

In some example embodiments, the determined operating architecture type is a default operating architecture type.

In some example embodiments, the operating architecture type is determined based on an indication received from a network device.

In some example embodiments, the indication indicates at least one of: a specific operating architecture type of the apparatus, or whether the first cell and the at least one second cell are collocated or non-collocated.

In some example embodiments, the apparatus may further comprise means for transmitting, to a network device, an indication of an expected operating architecture type and means for, if the terminal device determines that an acknowledgement for the expected operating architecture type is received from the network device, the operating architecture type is determined as the expected operating architecture type.

In some example embodiments, the operating architecture type is determined based on at least one assistance condition, the at least one assistance condition comprises at least one of the following: receive time difference associated with the first cell and the at least one second cell, power difference associated with the first cell and the at least one second cell, or quasi co-located information associated with the first cell and the at least one second cell.

In some example embodiments, the at least one RRM requirement is applied corresponding to the determined operating architecture type for at least one of the following: a scheduling restriction; an interruption operation, an activation delay of the at least one second cell, or an MTTD/MRTD requirement.

In some example embodiments, in accordance with a determination that a first operating architecture type is determined as the operating architecture type of the apparatus, the at least one RRM requirement is applied by at least one of the following: applying a scheduling restriction to all carriers on a same band; applying an intra-band interruption on all carriers on the same band; applying an intra-band cell activation delay of the at least one second cell; or applying an intra-band MTTD/MRTD requirement.

In some example embodiments, in accordance with a determination that a second operating architecture type is determined as the operating architecture type of the apparatus, the at least one RRM requirement is applied by at least one of the following: applying no scheduling restriction on the carriers on a same band; applying an inter-band interruption on the carriers on the same band; applying an inter-band cell activation delay of the at least one second cell; or applying an inter-band MTTD/MRTD requirement.

In some example embodiments, in accordance with a determination that a third operating architecture type is determined as the operating architecture type of the apparatus, the at least one RRM requirement is applied based on whether the apparatus applies the at least one RRM requirement according to an intra-band or an inter-band operation.

In some example embodiments, the at least one RRM requirement is applied by at least one of the following: applying a scheduling restriction or no scheduling restriction on the carriers on a same band; applying at least one of an inter-band interruption or an intra-band interruption on the carriers on the same band; applying at least one of an intra-band cell activation delay or an inter-band cell activation delay of the at least one second cell; or applying at least one of an intra-band MTTD/MRTD requirement or an inter-band MTTD/MRTD requirement.

In some example embodiments, the apparatus may further comprise means for transmitting, to a network device, information related to the third architecture type if the apparatus supports the third architecture type.

In some example embodiments, the apparatus may further comprise means for receiving, from a network device, information related to the third architecture type if the apparatus supports the third architecture type.

In some example embodiments, the apparatus may further comprise means for transmitting an indication of the determined operating architecture type to a network device.

In some example embodiments, an apparatus capable of performing the method 400 (for example, implemented at the network device 120) may include means for performing the respective steps of the method 400. The means may be implemented in any suitable form. For example, the means may be implemented in a circuitry or software module.

In some example embodiments, the apparatus comprises means for transmitting, to a terminal device, information associated with an operating architecture type of the terminal device, wherein the terminal device is served by a first cell and at least one second cell in an intra-band operation.

In some example embodiments, the apparatus may further comprise means for receiving, from the terminal device, an indication of a capability of supporting the first cell and the at least one second cell in a non-collocated intra-band operation.

In some example embodiments, the information comprises one of: a specific operating architecture type of the apparatus or whether the first cell and the at least one second cell are collocated or non-collocated.; or an acknowledgement for an expected operating architecture type selected by the terminal device from a first operating architecture type and a second operating architecture type.

In some example embodiments, the apparatus may further comprise means for perform at least one of: receiving, from the terminal device, information related to a third architecture type if the apparatus supports the third architecture type; or means for transmitting, to the terminal device, information related to the third architecture type if the apparatus supports the third architecture type, and wherein the third architecture type is associated with whether the apparatus applies the at least one RRM requirement according to an intra-band or an inter-band operation.

In some example embodiments, the apparatus may further comprise means for receiving, from the terminal device, an indication of the operating architecture type determined by the terminal device.

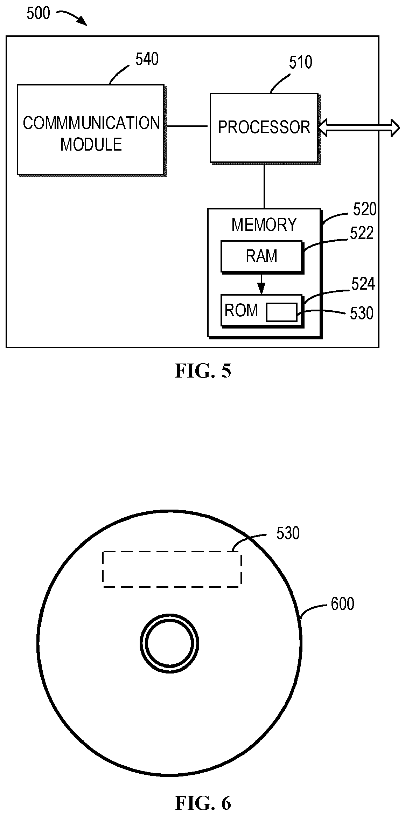

FIG. 5 is a simplified block diagram of a device 500 that is suitable for implementing example embodiments of the present disclosure. The device 500 may be provided to implement a communication device, for example, the terminal device 110 or the network device 120 as shown in FIG. 1. As shown, the device 500 includes one or more processors 510, one or more memories 520 coupled to the processor 510, and one or more communication modules 540 coupled to the processor 510.

The communication module 540 is for bidirectional communications. The communication module 540 has one or more communication interfaces to facilitate communication with one or more other modules or devices. The communication interfaces may represent any interface that is necessary for communication with other network elements. In some example embodiments, the communication module 540 may include at least one antenna.

The processor 510 may be of any type suitable to the local technical network and may include one or more of the following: general purpose computers, special purpose computers, microprocessors, digital signal processors (DSPs) and processors based on multicore processor architecture, as non-limiting examples. The device 500 may have multiple processors, such as an application specific integrated circuit chip that is slaved in time to a clock which synchronizes the main processor.

The memory 520 may include one or more non-volatile memories and one or more volatile memories. Examples of the non-volatile memories include, but are not limited to, a Read Only Memory (ROM) 524, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 522 and other volatile memories that will not last in the power-down duration.

A computer program 530 includes computer executable instructions that are executed by the associated processor 510. The instructions of the program 530 may include instructions for performing operations/acts of some example embodiments of the present disclosure. The program 530 may be stored in the memory, e.g., the ROM 524. The processor 510 may perform any suitable actions and processing by loading the program 530 into the RAM 522.

The example embodiments of the present disclosure may be implemented by means of the program 530 so that the device 500 may perform any process of the disclosure as discussed with reference to FIG. 2 to FIG. 4. The example embodiments of the present disclosure may also be implemented by hardware or by a combination of software and hardware.

In some example embodiments, the program 530 may be tangibly contained in a computer readable medium which may be included in the device 500 (such as in the memory 520) or other storage devices that are accessible by the device 500. The device 500 may load the program 530 from the computer readable medium to the RAM 522 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 6 shows an example of the computer readable medium 800 which may be in form of CD, DVD or other optical storage disk. The computer readable medium 800 has the program 530 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. An apparatus, comprising:
means for determining an operating architecture type of the apparatus, wherein the apparatus is served by a first cell and at least one second cell in an intra-band operation; and
means for applying at least one Radio Resource Management, RRM, requirement based on the determined operating architecture type of the apparatus.

2. The apparatus of claim 1, wherein the operating architecture type is determined in accordance with a determination that the apparatus indicates a capability of supporting the first cell and the at least one second cell in a non-collocated intra-band operation.

3. The apparatus of any of claims 1 to 2, wherein the determined operating architecture type is a default operating architecture type.

4. The apparatus of any of claims 1 to 3, wherein the operating architecture type is determined based on an indication received from a network device.

5. The apparatus of claim 4, wherein the indication indicates at least one of:
a specific operating architecture type of the apparatus, or
whether the first cell and the at least one second cell are collocated or non-collocated.

6. The apparatus of any of claims 1 to 5, further comprising:
means for transmitting, to a network device, an indication of an expected operating architecture type; and
wherein in accordance with a determination that an acknowledgement for the expected operating architecture type is received from the network device, the operating architecture type is determined as the expected operating architecture type.

7. The apparatus of any of claims 1 to 6, wherein the operating architecture type is determined based on at least one assistance condition, the at least one assistance condition comprises at least one of the following:
receive time difference associated with the first cell and the at least one second cell,
power difference associated with the first cell and the at least one second cell, or
quasi co-located information associated with the first cell and the at least one second cell.

8. The apparatus of any of claims 1 to 7, wherein
the at least one RRM requirement is applied corresponding to the determined operating architecture type for at least one of the following:
a scheduling restriction;
an interruption operation, or
an activation of the at least one second cell, or
a maximum transmit timing difference, MTTD/ maximum receive timing difference, MRTD requirement.

9. The apparatus of claim 8, wherein
in accordance with a determination that a first operating architecture type is determined as the operating architecture type of the apparatus, the at least one RRM requirement is applied by at least one of the following:
applying a scheduling restriction to all carriers on a same band;
applying an intra-band interruption on all carriers on the same band;
applying an intra-band cell activation of the at least one second cell; or
applying an intra-band MTTD/MRTD requirement.

10. The apparatus of claim 8, wherein
in accordance with a determination that a second operating architecture type is determined as the operating architecture type of the apparatus, the at least one RRM requirement is applied by at least one of the following:
applying no scheduling restriction on the carriers on a same band;
applying an inter-band interruption on the carriers on the same band;
applying an inter-band cell activation delay of the at least one second cell; or
applying an inter-band MTTD/MRTD requirement.

11. The apparatus of claim 8, wherein
in accordance with a determination that a third operating architecture type is determined as the operating architecture type of the apparatus, the at least one RRM requirement is applied based on whether the apparatus applies the at least one RRM requirement according to an intra-band or an inter-band operation.

12. The apparatus of claim 8, wherein the at least one RRM requirement is applied by at least one of the following:
applying a scheduling restriction or no scheduling restriction on the carriers on a same band;
applying at least one of an inter-band interruption or an intra-band interruption on the carriers on the same band;
applying at least one of an intra-band cell activation delay or an inter-band cell activation delay of the at least one second cell; or
applying at least one of an intra-band or an inter-band MRTD/MTTD requirement.

13. The apparatus of claim 11, further comprising:
means for transmitting, to a network device, information related to the third architecture type if the apparatus supports the third architecture type.

14. The apparatus of any of claims 1 to 13, further comprising:
means for receiving, from a network device, information related to the third architecture type if the apparatus supports the third architecture type.

15. The apparatus of any of claims 1 to 14, further comprising:
means for transmitting an indication of the determined operating architecture type to a network device.

16. An apparatus, comprising:
means for transmitting, to a terminal device, information associated with an operating architecture type of the terminal device, wherein the terminal device is served by a first cell and at least one second cell in an intra-band operation.

17. The apparatus of claim 16, further comprising:
means for receiving, from the terminal device, an indication of a capability of supporting the first cell and the at least one second cell in a non-collocated intra-band operation.

18. The apparatus of claim 17, wherein the information comprises one of:
an indication of at least one of:
a specific operating architecture type of the terminal device, or
whether the first cell and the at least one second cell are collocated or non-collocated; or
an acknowledgement for an expected operating architecture type selected by the terminal device from a first operating architecture type and a second operating architecture type.

19. The apparatus of any of claims 16 to 18, further comprising: means for performing at least one of:
receiving, from the terminal device, information related to a third architecture type if the terminal device supports the third architecture type; or
transmitting, to the terminal device, information related to the third architecture type if the terminal device supports the third architecture type.

20. The apparatus of any of claims 16 to 19, further comprising:
means for receiving, from the terminal device, an indication of the operating architecture type determined by the terminal device.

21. A method, comprising:
determining, at a terminal device, an operating architecture type of the terminal device, wherein the terminal device is served by a first cell and at least one second cell in an intra-band operation; and
applying at least one Radio Resource Management, RRM, requirement based on the determined operating architecture type of the terminal device.

22. A method, comprising:
transmitting, from a network device and to a terminal device, information associated with an operating architecture type of the terminal device, wherein the terminal device is served by a first cell and at least one second cell in an intra-band operation.

23. A computer readable medium comprising instructions which, when executed by an apparatus, cause the apparatus to perform at least the method of claim 21, or the method of claim 22.
